# EUROPÄISCHE PATENTSCHRIFT

(11) **EP 2 346 737 B1**
(45) Veröffentlichungstag und Bekanntmachung des Hinweises auf die Patenterteilung: **11.06.2014**
(21) Anmeldenummer: 09799010.5
(22) Anmeldetag: 11.11.2009
(51) Int. Cl.: B64G 1/40, F03H 1/00, H01J 27/16, H05H 1/24, H05H 1/54

(54) **IONENANTRIEB FÜR EIN RAUMFAHRZEUG**
ION DRIVE FOR A SPACECRAFT
ENTRAÎNEMENT IONIQUE POUR UN VAISSEAU SPATIAL

(30) Priorität: 19.11.2008 DE 102008058212
(43) Veröffentlichungstag der Anmeldung: 27.07.2011
(73) Patentinhaber: Astrium GmbH, 82024 Taufkirchen (DE)
(72) Erfinder: LEITER, Hans, 74229 Oedheim (DE); MÜLLER, Johann, 81929 München (DE); NEUMANN, Horst, 04509 Delitzsch (DE); SCHOLZE, Frank, 04821 Brandis (DE)
(74) Vertreter: Avenhaus, Beate
(86) Internationale Anmeldenummer: PCT/DE2009/001600
(87) Internationale Veröffentlichungsnummer: WO 2010/057463

(56) Entgegenhaltungen:
- DE-C1- 19 835 512
- DE-C1- 19 948 229
- US-A- 5 924 277
- US-B1- 6 293 090

## Beschreibung

Die Erfindung betrifft einen Ionenantrieb für ein Raumfahrzeug, umfassend einen Hochfrequenzgenerator zur Erzeugung eines elektromagnetischen Wechselfelds für die Ionisation eines Treibstoffs und einem geeigneten System zur Ionenbeschleunigung.

In der Raumfahrt werden in steigendem Umfang elektrische Triebwerke genutzt, um Satelliten oder Raumsonden nach ihrer Trennung von der Trägerrakete anzutreiben. Speziell für eine Bahnkorrektur von geostationären Kommunikationssatelliten (sog. Stationskeeping) werden elektrische Triebwerke eingesetzt. Hierzu kommen vor allem Ionentriebwerke und SPT-Plasmatriebwerke zum Einsatz. Beide Typen erzeugen ihren Schub, indem beschleunigte Ionen ausgestoßen werden. Um eine Aufladung des Satelliten zu vermeiden, wird der ausgestoßene Ionenstrahl neutralisiert. Die hierzu üblicherweise benötigten Elektronen werden aus einer separaten Elektronenquelle bereitgestellt und mittels Plasmakopplung in den Ionenstrahl eingebracht.

In Hochfrequenz-lonentriebwerken (Radio Frequency Ion Thruster, RIT) wird der Treibstoff mit Hilfe eines elektromagnetischen Wechselfeldes ionisiert und dann zur Schuberzeugung in einem elektrostatischen Feld beschleunigt. Nach der Passage eines Neutralisators, der dem Ionenstrahl wieder Elektronen zuführt und die erzeugte, positive Raumladung kompensiert, werden die Teilchen in Form eines Strahls ausgestoßen. Zum Betrieb dieses Ionenantriebs sind eine Gasversorgung, ein HF-Generator zur Erzeugung des elektromagnetischen Wechselfelds sowie Hochspannungsquellen zur Erzeugung eines die Ladungsträger beschleunigenden Feldes erforderlich. Bei üblichen Gittersystemen zur Erzeugung des elektrostatischen Feldes zur Ionenbeschleunigung sind die Spannungen des Hochspannungsgenerators und des Gittersystems untereinander zur Schuberzeugung zu koordinieren. Für den Neutralisator zur Neutralisation des positiven lonenstrahls durch Elektronen aus einer Elektronenquelle wird ebenfalls mindestens eine Spannungsquelle benötigt.

Der Ionenantrieb zeichnet sich durch einen simplen Aufbau und hohe Zuverlässigkeit aus. Allerdings entsteht durch die benötigten elektronischen Baugruppen zur Spannungsversorgung der beschriebenen Bauteile eine hohe Komplexität.

Aus der DE 199 48 229 C1, die den nächstliegenden Stand der Technik darstellt, ist ein Ionenantrieb für ein Raumfahrzeug bekannt, das einen Hochfrequenzgenerator zur Erzeugung eines elektromagnetischen Wechselfelds für die Ionisation eines Treibstoffs und ein Ladungsträgerbeschleunigungssystem zur Erzeugung eines elektrostatischen Felds umfasst.

Es ist daher Aufgabe der vorliegenden Erfindung, einen Ionenantrieb für ein Raumfahrzeug, insbesondere ein RIT-Triebwerk, anzugeben, welcher konstruktiv einfacher aufgebaut und kostengünstiger herstellbar ist. Es ist ferner Aufgabe der vorliegenden Erfindung, ein Verfahren zum Betreiben eines Ionenantriebs, insbesondere eines RIT-Triebwerks, anzugeben, bei welchem die Betriebssicherheit erhöht und der Kontrollaufwand minimiert werden kann.

Diese Aufgaben werden durch einen Ionenantrieb mit den Merkmalen des Patentanspruches 1 bzw. durch ein Verfahren mit den Merkmalen des Patentanspruches 13 gelöst. Vorteilhafte Ausgestaltungen ergeben sich aus den abhängigen Patentansprüchen.

Die Erfindung schafft einen Ionenantrieb für ein Raumfahrzeug, umfassend einen Hochfrequenzgenerator zur Erzeugung eines elektromagnetischen Wechselfelds für die Ionisation eines Treibstoffs, insbesondere eines Gases, und ein System zur Beschleunigung der erzeugten Ladungsträger. Die Erfindung zeichnet sich dadurch aus, dass der Ionenantrieb ein erstes Mittel umfasst, mit dem aus den von dem Hochfrequenzgenerator erzeugten Strömen und/oder Spannungen zur Erzeugung des elektromagnetischen Wechselfelds die für das System zur Beschleunigung der erzeugten Ladungsträger benötigten Hochspannungen ableitbar sind.

Bei dem erfindungsgemäßen Ionenantrieb handelt es sich um ein Hochfrequenzlonentriebwerk, insbesondere ein Radiofrequenz-Ionentriebwerk (Radio Frequency Ion Thruster, RIT). Als Treibstoff kommt insbesondere ein Gas, wie z.B. Xenon, zum Einsatz. Der erfindungsgemäße Ionenantrieb weist den Vorteil auf, dass durch die Vereinfachung des Spannungsversorgungssystems die Masse des Ionenantriebs im Vergleich zu herkömmlichen Ionenantrieben verringert werden kann. Gleichzeitig lässt sich die Betriebssicherheit erhöhen und der Kontrollaufwand minimieren.

In einer Ausgestaltung ist das erste Mittel dazu ausgebildet, aus den von dem Hochfrequenzgenerator erzeugten Strömen und/oder Spannungen zur Erzeugung des elektromagnetischen Wechselfelds zumindest die zur Ionenbeschleunigung benötigte(n) Hochspannung(en) abzuleiten. Bei einem üblichen zwei-Gitter-Beschleunigungssystem ist das erste Gitter insbesondere ein Schirmgitter. Das zweite Gitter ist insbesondere ein Beschleunigungsgitter. Umfasst das Gittersystem mehr als die genannten zwei Gitter, so werden auch die für die weiteren Gitter benötigten Hochspannungen durch das erste Mittel aus den von dem Hochfrequenzgenerator erzeugten Strömen und/oder Spannungen abgeleitet.

In einer ersten Ausgestaltung umfasst das erste Mittel zur Auskopplung eines Teils der von dem Hochfrequenzgenerator erzeugten Leistung zumindest einen mit dem Hochfrequenzgenerator gekoppelten Kondensator.

In einer alternativen Ausgestaltung umfasst das erste Mittel zur Auskopplung eines Teils der von dem Hochfrequenzgenerator erzeugten Leistung zumindest eine mit dem Hochfrequenzgenerator gekoppelte Koppelspule, an deren Spulenanschlüssen die für das Gittersystem benötigten Spannungen bereitgestellt sind. Insbesondere ist die zumindest eine Koppelspule in Form einer Sekundärwicklung eines Transformators ausgebildet, die mit einer Spule des Hochfrequenzgenerators als Primärwicklung des Transformators koppelt. Der in das Hochfrequenzsystem integrierbare Hochspannungstransformator stellt an dessen Ausgang die Spannungen für das Beschleunigungssystem bereit. Es kann weiterhin vorgesehen sein, dass die zumindest eine Koppelspule jeweils eine oder mehrere Anzapfungen aufweist, wobei diese von einer Spule des Hochfrequenzgenerators galvanisch getrennt ist oder sind.

Optional kann ein zweites Mittel zur Gleichrichtung der von dem Hochfrequenzgenerator für das Gittersystem abgeleiteten Spannungen vorgesehen sein. Es ist insbesondere eine Gleichrichtung der Spannungen für das Beschleunigungssystem des Ionenantriebs, der Ionenquellen, der Neutralisatoren oder der Elektronenquellen vorgesehen.

Es kann weiterhin zweckmäßig sein, ein drittes Mittel zur Glättung der gleichgerichteten Spannungen für das Beschleunigungssystem vorzusehen. Die Glättung kann durch ein Netzwerk aus Spulen (L) und/oder Kondensatoren (C) und/oder Widerständen (R) gebildet sein. Insbesondere kann ein LC-, ein L-, ein C- oder ein RLC-Netzwerk zur Glättung vorgesehen sein. Das Netzwerk aus Spulen und/oder Kondensatoren und/oder Widerständen dient darüber hinaus dazu, die Phasenlage am Beschleunigungssystem zu optimieren. Für ein Radiofrequenz-Ionentriebwerk sind Phasenlage und Spannungen am Beschleunigungssystem bevorzugt derart einzustellen, dass der mittlere Ionenstrom einem mittleren Elektronenstrom entspricht. Letzterer kann, wie eingangs erläutert, auch durch einen separaten Neutralisator bereitgestellt sein.

Für einen ordnungsgemäßen Betrieb des Ionenantriebs müssen die jeweiligen Komponenten mit einer entsprechenden Spannung betrieben werden. Eine Festlegung des Spannungsverhältnisses zwischen jeweiligen Spannungen des Gittersystems und der Spannung des Hochfrequenzgenerators erfolgt gemäß einer Ausgestaltung durch eine Hochspannungskaskade, umfassend eine Anzahl an Kondensatoren und Dioden, und/oder durch das Windungsverhältnis der Spule des Hochfrequenzgenerators zu der bzw. den Koppelspulen. Durch eine Hochspannungskaskade kann die durch den Hochfrequenzgenerator bereitgestellte Spannung erhöht werden. Eine solche Kaskadenschaltung ist auch unter dem Begriff der Ladungspumpe bekannt.

Gemäß einer weiteren vorteilhaften Ausgestaltung ist zumindest ein steuerbarer Schalter zwischen dem Hochfrequenzgenerator und dem Beschleunigungssystem zur zeitlichen Steuerung des Ladungsträgerstroms vorgesehen. Der zumindest eine steuerbare Schalter kann als mechanischer oder als elektronischer Schalter ausgebildet sein. Insbesondere können Halbleiterschalter vorgesehen werden.

In einer weiteren Ausgestaltung ist ein viertes Mittel zur Umpolung der Spannungen an dem Gittersystem vorgesehen zur Extraktion und Beschleunigung von Ionen und Elektronen. In dieser Ausgestaltung kann auf die dem ersten Mittel nachgeschaltete Gleichrichtung verzichtet werden, da sich die Polarität an den Komponenten des Beschleunigungssystems zueinander verändert und wechselweise Elektronen und Ionen erzeugt werden. Die Spannungen am Beschleunigungssystem sind zweckmäßigerweise derart zu wählen, dass bevorzugt der Ionenstrom dem Elektronenstrom äquivalent wird. Die Phasenlage an den Komponenten des Beschleunigungssystems kann, wie erläutert, durch geeignete RCL-Netzwerke beeinflusst werden. Ein weiterer Vorteil dieser Ausgestaltung besteht darin, dass auf einen separaten Neutralisator verzichtet werden kann, wodurch sich eine weitere Vereinfachung des Ionenantriebs ergibt.

In einer alternativen Ausgestaltung weist der Ionenantrieb einen Neutralisator auf, wobei eine zu dessen Betrieb notwendige Spannung aus dem von dem Hochfrequenzgenerator erzeugten Strömen und/oder Spannungen zur Erzeugung des elektromagnetischen Wechselfelds abgeleitet ist und insbesondere durch das erste Mittel bereitgestellt wird. Der erfindungsgemäße Ionenantrieb ermöglicht in dieser Ausgestaltung den Entfall einer separaten Spannungsquelle für den Betrieb des Neutralisators. Hierdurch ergibt sich der bereits erläuterte einfachere konstruktive Aufbau bei verringerter Masse des Ionentriebwerks.

Die Erfindung schafft ferner ein Verfahren zum Betreiben eines Ionenantriebs für ein Raumfahrzeug, der einen Hochfrequenzgenerator zur Erzeugung eines elektromagnetischen Wechselfelds für die tonisation eines Treibstoffs und ein Beschleunigungssystem zur Erzeugung eines elektrostatischen Felds zur Ionenbeschleunigung umfasst. Erfindungsgemäß werden aus den von dem Hochfrequenzgenerator erzeugten Strömen und/oder Spannungen zur Erzeugung des elektromagnetischen Wechselfelds die für das Beschleunigungssystem benötigten Hochspannungen abgeleitet. Hiermit sind die gleichen Vorteile verbunden, wie diese vorstehend in Verbindung mit dem erfindungsgemäßen Ionenantrieb erläutert wurden.

Die Erfindung wird nachfolgend anhand eines Ausführungsbeispiels näher erläutert.

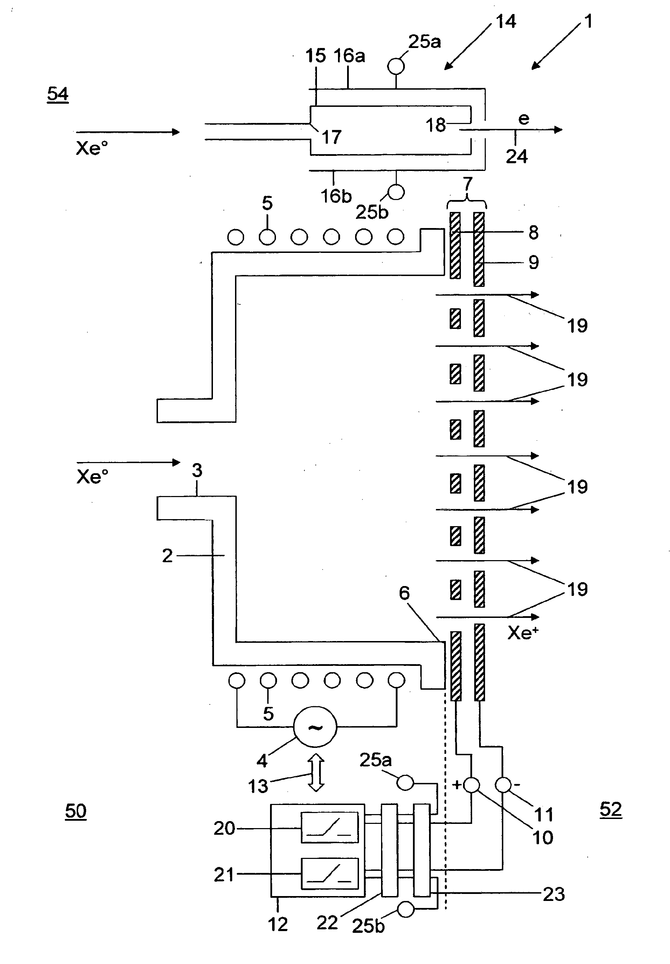

Die einzige Figur zeigt in einer schematischen Darstellung einen Querschnitt durch einen erfindungsgemäßen Ionenantrieb.

Der Ionenantrieb 1 weist einen Entladungsraum 2 (lonisator) auf. An einem Einlass 3 kann über ein nicht dargestelltes Ventil Treibstoff, z.B. Xenon-Gas, in den Entladungsraum 2 zur Ionisation eingebracht werden. Eine um den Entladungsraum 2 gewickelte Spule 5 ist mit einem Hochfrequenzgenerator 4 zur Erzeugung eines elektromagnetischen Wechselfeldes im Inneren des Entladungsraums 2 zur Ionisation des Treibstoffs ausgebildet. An einem dem Einlass 3 gegenüber liegenden Ende des Entladungsraums 2 ist ein Auslass 6 vorgesehen. An den Auslass 6 grenzt ein Gittersystem 7 an, das als erstes Gitter 8 ein Schirmgitter (Plasmagrenzanker) und als zweites Gitter 9 ein Beschleunigungsgitter aufweist. Zum Betrieb des Gittersystems 7 benötigt das erste Gitter 8 eine positive und das zweite Gitter 9 eine negative Hochspannung. Die positive Versorgungsspannung wird an einem Potentialanschluss 10 für das erste Gitter 8 und die negative Hochspannung an einem Potentialanschluss 11 für das zweite Gitter 9 bereitgestellt.

In bekannter Weise weist der Ionenantrieb 1 in dem dargestellten Ausführungsbeispiel einen Neutralisator 14 auf. Dieser umfasst eine Kammer 15, an deren Einlass 17 ein Gas, z.B. Xenon, in die Kammer 15 eingeleitet wird. Die Kammer 15 ist von Elektroden 16a, 16b umgeben, so dass an einem Auslass 18 der Kammer 15 ein zu dem Ionenstrahl 19 äquivalenter Elektronenstrahl 24 zur Neutralisation des Ionenstrahls 19 erzeugt werden kann. An Potentialanschlüssen 25a, 25b der Elektroden 16a, 16b des Neutralisators wird eine Hochspannung für den Neutralisator bereitgestellt.

Durch Wechseln der Polarität an dem Gittersystem 7 des Ionenantriebs 1 können anstatt Ionen auch Elektronen aus dem Entladungsraum 2 extrahiert und durch das Gittersystem 7 beschleunigt werden. Durch entsprechende Wahl der Extraktionszeiten für Ionen und Elektronen und/oder der Höhe der Spannungen an den Potentialanschlüssen 10, 11 für die beiden Extraktionsphasen kann ein dem Ionenstrom äquivalenter Elektronenstrom eingestellt werden. In diesem Fall kann auf den Neutralisator 14 verzichtet werden.

Der Ionenantrieb 1 umfasst damit in bekannter Weise drei Funktionsbereiche: einen Bereich 50 zur Ionenerzeugung, einen Bereich 52 zur Ionenbeschleunigung und einen optionalen Bereich 54 zur Neutralisation des Ionenstrahls.

Die Erzeugung der für den Betrieb des Ionenantriebs notwendigen Hochspannungen für das Gitter 7 und den optionalen Neutralisator 14 erfolgt nicht über eigene Spannungsquellen, sondern durch ein erstes Mittel 12, mit dem aus den von dem Hochfrequenzgenerator 4 erzeugten Strömen und/oder Spannungen die für das Gittersystem 7 und den optionalen Neutralisator benötigten Hochspannungen ableitbar sind. In der Figur ist das Ableiten der entsprechenden Hochspannungen durch eine Kopplung (Pfeil 13) zwischen dem Hochfrequenzgenerator 4 und dem ersten Mittel 12 symbolisiert.

Die Ableitung der Hochspannungen und Zurverfügungstellung an den Potentialanschlüssen 10, 11 und optional 25a, 25b kann beispielsweise dadurch erfolgen, dass durch Kondensatoren (nicht dargestellt) ein Teil der Hochfrequenzleistung aus dem mit der Spule 5 gekoppelten Hochfrequenzgenerator 4 ausgekoppelt wird. In dieser Ausgestaltung wird die an den Kondensatoren anliegende Spannung durch ein zweites Mittel zur Gleichrichtung 22 gleichgerichtet und optional durch ein drittes Mittel 23 geglättet. Ist die erforderliche Spannung an den Gittern 8, 9 des Gittersystems 7 höher als die dem Hochfrequenzkreis entnehmbare Spannung, so kann in dem ersten Mittel 12 eine Kaskadenschaltung, umfassend Kondensatoren und Dioden, vorgesehen sein, die die Spannung auf das erforderliche Maß erhöht. Eine entsprechende Kaskadenschaltung kann ebenso für die Elektroden 16a, 16b des Neutralisators vorgesehen sein.

Alternativ können die für den Betrieb des Gittersystems 7 und des optionalen Neutralisators 14 benötigten Spannungen durch zumindest eine Koppelspule (nicht dargestellt) bereitgestellt werden, an deren Spulenanschlüssen die für das Gittersystem benötigten Spannungen abgreifbar sind. In einer Variante kann beispielsweise ein Hochspannungstransformator in das Hochfrequenzsystem integriert werden, so dass an dessen Ausgang die notwendigen Spannungen für das Gittersystem zur Verfügung stehen. Ebenso können eine oder mehrere Koppelspulen mit gegebenenfalls einer oder mehreren Abzapfungen direkt am Entladungsraum 2 angeordnet werden (nicht dargestellt). Die Koppelspule oder - spulen werden derart ausgeführt, dass diese von der Spule 5 zur Ionisation des Treibstoffes galvanisch getrennt sind. Bevorzugt wird oder werden die Koppelspulen derart angebracht, dass eine gute Kopplung zwischen der Spule 5 und der oder den Spulen für das Gittersystem 7 bzw. dem optionalen Neutralisator 14 gegeben ist.

Die weiter oben beschriebenen Mittel 22 und 23 zur Gleichrichtung und Glättung der Spannungen können im Fall der Koppelspulen ebenfalls vorgesehen sein. Allerdings ist bei der Leistungsauskopplung durch Spulen eine weitere Vereinfachung des Antriebssystems möglich, da ebenso auf die nachgeschaltete Gleichrichtung verzichtet werden kann. In diesem Fall ändert sich die Polarität der Gitter 8, 9 des Gittersystems zueinander, so dass wechselweise Elektronen und Ionen erzeugt werden. Dabei sind die Spannungen an den Gittern 8, 9 derart zu wählen, dass bevorzugt der Ionenstrom zu dem Elektronenstrom äquivalent wird. Gegebenenfalls ist eine Anpassung der Phasenlage am Plasmagrenzanker 8 und am Beschleunigungsgitter 9 notwendig, welche durch geeignete RCL-Schaltungen (nicht dargestellt) beeinflusst werden kann.

Die Mittel 22 und 23 zur Gleichrichtung und Glättung können allgemein für einen Ionenantrieb entfallen, welcher ohne Neutralisator 14 arbeitet. Bei einem solchen Antrieb werden durch Umpolung der Spannungen an den Gittern 8, 9 sowohl Elektronen als auch Ionen aus dem Entladungsraum 2 extrahiert und beschleunigt. LC-, L-, C- oder RLC-Glieder können dazu verwendet werden, um die Phasenlage an den Gittern 8, 9 zu optimieren. Bevorzugt sind Phasenlage und Spannungen derart einzustellen, dass der mittlere Ionenstrom dem mittleren Elektronenstrom entspricht.

In dem Mittel 12 zur Spannungsbereitstellung sind schematisch zwei Schalter 20, 21, welche als mechanische oder elektronische Schalter ausgebildet sein können, abgebildet. Die Schalter 20, 21 dienen dazu, das Schirmgitter 8 und/oder das Beschleunigungsgitter 9 spannungslos zu halten, auch wenn Treibstoff in dem Entladungsraum 2 ionisiert wird. Gegebenenfalls kann ein einziger Schalter für sämtliche Gitter des Gittersystems 7 vorgesehen sein.

Mit zunehmender Hochfrequenzleistung steigen auch die Spannungen an den Potentialanschlüssen 10, 11 für die Gitter 8, 9. Dies ist ionenoptisch günstig, da die mit der höheren Hochfrequenzleistung einhergehende Plasmadichteerhöhung auch einer höheren Extraktionsspannung bedarf.

Ein erfindungsgemäßer Ionenantrieb weist den Vorteil auf, dass das Spannungsversorgungssystem stark vereinfacht werden kann. Hierdurch ist die Einsparung von Masse möglich. Darüber hinaus wird die Betriebssicherheit erhöht und der Kontrollaufwand minimiert. Ferner lässt sich ein Antrieb ohne separaten Neutralisator realisieren. Ermöglicht wird dies durch ein Mittel zur Spannungsbereitstellung, mit dem aus den von dem Hochfrequenzgenerator erzeugten Strömen und/oder Spannungen benötigte Hochspannungen ableitbar sind. Insbesondere können Spannungen für die Gitter für Hochfrequenzionentriebwerke, Hochfrequenzionenquellen, Hochfrequenzneutralisatoren oder Hochfrequenzelektronenquellen bereitgestellt werden.

### Bezugszeichenliste

- 1: Ionenantrieb
- 2: Entladungsraum
- 3: Einlass
- 4: Hochfrequenzgenerator
- 5: Spule des Hochfrequenzgenerators
- 6: Auslass
- 7: Gittersystem
- 8: Schirmgitter / Plasmagrenzanker (erstes Gitter)
- 9: Beschleunigungsgitter (zweites Gitter)
- 10: Potentialanschluss für das erste Gitter 8
- 11: Potentialanschluss für das zweite Gitter 9
- 12: Mittel zur Spannungsbereitstellung
- 13: Kopplung (schematisch)
- 14: Neutralisator
- 15: Kammer
- 16a, 16b: Elektrode
- 17: Einlass
- 18: Auslass
- 19: Ionenstrahl
- 20: Schalter
- 21: Schalter
- 22: Mittel zur Gleichrichtung
- 23: Mittel zur Glättung
- 24: Elektronenstrahl
- 25a, 25b: Potentialanschluss
- 50: Ionenerzeugung
- 52: Ionenbeschleunigung
- 54: Neutralisation des lonenstrahls

## Patentansprüche

1. Ionenantrieb (1) für ein Raumfahrzeug, umfassend einen Hochfrequenzgenerator (4) zur Erzeugung eines elektromagnetischen Wechselfelds für die Ionisation eines Treibstoffs und ein geeignetes Ladungsträgerbeschleunigungssystem (7) zur Erzeugung eines elektrostatischen Felds, **dadurch gekennzeichnet, dass** dieser ein erstes Mittel umfasst, mit dem aus den von dem Hochfrequenzgenerator (4) erzeugten Strömen und/oder Spannungen zur Erzeugung des elektromagnetischen Wechselfelds die für das Beschleunigungssystem (7) benötigten Hochspannungen ableitbar sind.

2. Ionenantrieb nach Anspruch 1, **dadurch gekennzeichnet, dass** das erste Mittel (12) dazu ausgebildet ist, aus den von dem Hochfrequenzgenerator (4) erzeugten Strömen und/oder Spannungen zur Erzeugung des elektromagnetischen Wechselfelds zumindest die für das Ionenbeschleunigungssystem (7),(8),(9) benötigte Hochspannungen abzuleiten.

3. Ionenantrieb nach einem der Ansprüche 1 und 2, **dadurch gekennzeichnet, dass** das erste Mittel (12) zur Auskopplung eines Teils der von dem Hochfrequenzgenerators (4) erzeugten Leistung zumindest einen mit dem Hochfrequenzgenerator (4) gekoppelten Kondensator umfasst.

4. Ionenantrieb nach einem der Ansprüche 1 bis 2, **dadurch gekennzeichnet, dass** das erste Mittel (12) zur Auskopplung eines Teils der von dem Hochfrequenzgenerator (4) erzeugten Leistung zumindest eine mit dem Hochfrequenzgenerator (4) gekoppelte Koppelspule umfasst, an deren Spulenanschlüssen die für das Beschleunigungssystem (7) benötigten Spannungen bereitgestellt sind.

5. Ionenantrieb nach Anspruch 4, **dadurch gekennzeichnet, dass** die zumindest eine Koppelspule in Form einer Sekundärwicklung eines Transformators ausgebildet ist, die mit einer Spule des Hochfrequenzgenerators (4) als Primärwicklung des Transformators koppelt.

6. Ionenantrieb nach Anspruch 4 oder 5, **dadurch gekennzeichnet, dass** die zumindest eine Koppelspule jeweils eine oder mehrere Anzapfungen aufweist, wobei diese von einer Spule des Hochfrequenzgenerators (4) galvanisch getrennt ist oder sind.

7. Ionenantrieb nach einem der Ansprüche 3 bis 6, **dadurch gekennzeichnet, dass** ein zweites Mittel (22) zur Gleichrichtung der von dem Hochfrequenzgenerator (4) für das Beschleunigungssystem (7) abgeleiteten Spannungen vorgesehen ist.

8. Ionenantrieb nach Anspruch 7, **dadurch gekennzeichnet, dass** ein drittes Mittel (23) zur Glättung der gleichgerichteten Spannungen für das Beschleunigungssystem (7) vorgesehen ist.

9. Ionenantrieb nach einem der vorherigen Ansprüche in Verbindung mit Anspruch 4, **dadurch gekennzeichnet, dass** eine Festlegung des Spannungsverhältnisses zwischen jeweiligen Spannungen des Beschleunigungssystems (7) und der Spannung des Hochfrequenzgenerators (4) erfolgt durch eine Hochspannungskaskade, umfassend eine Anzahl an Kondensatoren und Dioden, und/oder durch das Windungsverhältnis der Spule des Hochfrequenzgenerators (4) zu der Koppelspule.

10. Ionenantrieb nach einem der vorherigen Ansprüche, **dadurch gekennzeichnet, dass** zumindest ein steuerbarer Schalter (20, 21) zwischen dem Hochfrequenzgenerator (4) und dem Beschleunigungssystem (7) zur Auftrennung der Spannungsversorgung vorgesehen ist.

11. Ionenantrieb nach einem der vorherigen Ansprüche, **dadurch gekennzeichnet, dass** ein viertes Mittel zur Umpolung der Spannungen an dem Beschleunigungssystem (7) vorgesehen ist zur Extraktion und Beschleunigung von Ionen und Elektronen.

12. Ionenantrieb nach einem der Ansprüche 1 bis 10, **dadurch gekennzeichnet, dass** der Ionenantrieb (1) einen separaten Neutralisator (14) aufweist, wobei eine zu dessen Betrieb notwendige Spannung aus den von dem Hochfrequenzgenerator (4) erzeugten Strömen und/oder Spannungen zur Erzeugung des elektromagnetischen Wechselfelds abgeleitet ist und insbesondere durch das erste Mittel (12) bereitgestellt wird.

13. Verfahren zum Betreiben eines Ionenantriebs (1) für ein Raumfahrzeug, der einen Hochfrequenzgenerator (4) zur Erzeugung eines elektromagnetischen Wechselfelds für die Ionisation eines Treibstoffs und ein Gittersystem (7) mit einem geeigneten Beschleunigungssystem(8, 9) der Ladungsträger umfasst, **dadurch gekennzeichnet, dass** aus den von dem Hochfrequenzgenerator (4) erzeugten Strömen und/oder Spannungen zur Erzeugung des elektromagnetischen Wechselfelds die für das Beschleunigungssystem (7) benötigten Hochspannungen abgeleitet werden.

## Claims

1. Ion drive (1) for a spacecraft, comprising a radiofrequency generator (4) for generating an alternating electromagnetic field for the ionization of a propellant and a suitable charge carrier acceleration system (7) for generating an electrostatic field, **characterized in that** said ion drive comprises a first means, with which the high voltages required for the acceleration system (7) can be derived from the currents and/or voltages generated by the radiofrequency generator (4) for producing the alternating electromagnetic field.

2. Ion drive according to Claim 1, **characterized in that** the first means (12) is designed to derive at least the high voltages which are required for the ion acceleration system (7), (8), (9) from the currents and/or voltages generated by the radiofrequency generator (4) for generating the alternating electromagnetic field.

3. Ion drive according to either of Claims 1 and 2, **characterized in that** the first means (12) comprises at least one capacitor, which is coupled to the radiofrequency generator (4), for coupling out some of the power generated by the radiofrequency generator (4).

4. Ion drive according to one of Claims 1 to 2, **characterized in that** the first means (12) comprises at least one coupling coil, which is coupled to the radiofrequency generator (4) and at whose coil connections the voltages required for the acceleration system (7) are provided, for coupling out some of the power generated by the radiofrequency generator (4).

5. Ion drive according to Claim 4, **characterized in that** the at least one coupling coil is in the form of a secondary winding of a transformer, which secondary winding is coupled to a coil of the radiofrequency generator (4) as primary winding of the transformer.

6. Ion drive according to Claim 4 or 5, **characterized in that** the at least one coupling coil has in each case one or more taps, wherein said tap(s) is/are galvanically isolated from a coil of the radiofrequency generator (4).

7. Ion drive according to one of Claims 3 to 6, **characterized in that** a second means (22) is provided for rectifying the voltages derived from the radiofrequency generator (4) for the acceleration system (7).

8. Ion drive according to Claim 7, **characterized in that** a third means (23) is provided for smoothing the rectified voltages for the acceleration system (7).

9. Ion drive according to one of the preceding claims in conjunction with Claim 4, **characterized in that** the voltage ratio between respective voltages of the acceleration system (7) and the voltage of the radiofrequency generator (4) is ascertained by a high-voltage cascade, comprising a number of capacitors and diodes, and/or by the turns ratio of the coil of the radiofrequency generator (4) to the coupling coil.

10. Ion drive according to one of the preceding claims, **characterized in that** at least one controllable switch (20, 21) is provided between the radiofrequency generator (4) and the acceleration system (7) for interrupting the voltage supply.

11. Ion drive according to one of the preceding claims, **characterized in that** a fourth means is provided for reversing the polarity of the voltages at the acceleration system (7) in order to extract and accelerate ions and electrons.

12. Ion drive according to one of Claims 1 to 10, **characterized in that** the ion drive (1) has a separate neutralizer (14), wherein a voltage required for the operation of said neutralizer is derived from the currents and/or voltages generated by the radiofrequency generator (4) for generating the alternating electromagnetic field and in particular is provided by the first means (12).

13. Method for operating an ion drive (1) for a spacecraft, which comprises a radiofrequency generator (4) for generating an alternating electromagnetic field for the ionization of a propellant and a grid system (7) comprising a suitable acceleration system (8, 9) of the charge carriers, **characterized in that** the high voltages required for the acceleration system (7) are derived from the currents and/or voltages generated by the radiofrequency generator (4) for generating the alternating electromagnetic field.

## Revendications

1. Propulseur ionique (1) pour véhicule spatial, comprenant
un générateur (4) de hautes fréquences qui forme un champ électromagnétique alternatif pour l'ionisation d'un propergol et
un système approprié (7) d'accélération de porteurs de charge qui forme un champ électrostatique, **caractérisé en ce que**
le propulseur présente un premier moyen qui permet de prélever les hautes tensions nécessaires pour le système d'accélération (7) sur les courants et/ou les tensions formés par le générateur (4) de hautes fréquences en vue de former le champ électromagnétique alternatif.

2. Propulseur ionique selon la revendication 1, **caractérisé en ce que** premier moyen (12) est configuré pour prélever les hautes tensions nécessaires au moins pour le système (7), (8), (9) d'accélération des ions sur les courants et/ou les tensions formés par le générateur (4) de hautes fréquences en vue de former le champ électromagnétique alternatif.

3. Propulseur ionique selon l'une des revendications 1 et 2, **caractérisé en ce que** le premier moyen (12) comprend au moins un condensateur raccordé au générateur (4) de hautes fréquences pour découpler une partie de la puissance produite par le générateur (4) de hautes fréquences.

4. Propulseur ionique selon l'une des revendications 1 et 2, **caractérisé en ce que** le premier moyen (12) comprend au moins une bobine de couplage raccordée au générateur (4) de hautes fréquences et aux bornes de laquelle les tensions nécessaires pour le système d'accélération (7) sont délivrées, pour découpler une partie de la puissance produite par le générateur (4) de hautes fréquences.

5. Propulseur ionique selon la revendication 4, **caractérisé en ce que** la ou les bobines de couplage sont configurées comme enroulement secondaire d'un transformateur qui est couplé à une bobine du générateur (4) de hautes fréquences formant l'enroulement primaire du transformateur.

6. Propulseur ionique selon les revendications 4 ou 5, **caractérisé en ce que** la ou les bobines de couplage présentent chacune une ou plusieurs bornes de prélèvement séparées galvaniquement d'une bobine du générateur (4) de hautes fréquences.

7. Propulseur ionique selon l'une des revendications 3 à 6, **caractérisé en ce qu'**un deuxième moyen (22) de redressement des tensions dérivées du générateur (4) de hautes fréquences pour le système d'accélération (7) est prévu.

8. Propulseur ionique selon la revendication 7, **caractérisé en ce qu'**un troisième moyen (23) est prévu pour lisser les tensions redressées prévues pour le système d'accélération (7).

9. Propulseur ionique selon l'une des revendications précédentes dans la mesure où elles sont liées à la revendication 4, **caractérisé en ce qu'**une définition du rapport entre chacune des tensions du système d'accélération (7) et la tension du générateur (4) de hautes fréquences est réalisée par une cascade de hautes tensions qui comprend plusieurs condensateurs et diodes et/ou par le rapport entre le nombre de spires des bobines du générateur (4) de hautes fréquences et celui de la bobine de couplage.

10. Propulseur ionique selon l'une des revendications précédentes, **caractérisé en ce qu'**au moins un commutateur asservi (20, 21) est prévu entre le générateur (4) de hautes fréquences et le système d'accélération (7) en vue de la tension d'alimentation.

11. Propulseur ionique selon l'une des revendications précédentes, **caractérisé en ce qu'**un quatrième moyen est prévu pour dépolariser les tensions au niveau du système d'accélération (7), pour extraire et accélérer des ions et des électrons.

12. Propulseur ionique selon l'une des revendications 1 à 10, **caractérisé en ce que** le propulseur ionique (1) présente un neutralisateur (14) séparé, la tension nécessaire pour son fonctionnement étant reprise sur les courants et/ou tensions produits par le générateur (4) de hautes fréquences pour former le champ électromagnétique alternatif, et en particulier par le premier moyen (12).

13. Procédé de conduite d'un propulseur ionique (1) pour véhicule spatial, qui comporte un générateur (4) de hautes fréquences qui forme un champ électromagnétique alternatif pour l'ionisation d'un propergol et un système (7) de grille doté d'un système approprié d'accélération (8, 9) des porteurs de charge, **caractérisé en ce que**
les hautes tensions nécessaires pour le système d'accélération (7) sont reprises sur les courants et/ou tensions produits par le générateur (4) de hautes fréquences pour former le champ électromagnétique alternatif.
